## Europäisches Patentamt

## European Patent Office

## Office européen des brevets

(19)

(11) Veröffentlichungsnummer: **0 028 273**
**B1**

(12) **EUROPÄISCHE PATENTSCHRIFT**

(45) Veröffentlichungstag der Patentschrift:
28.09.83

(51) Int. Cl.³: **H 04 L 9/04**

(21) Anmeldenummer: **79200745.2**

(22) Anmeldetag: **10.12.79**

(54) **Verfahren und Einrichtung zur Erzeugung von Geheimschlüsseln.**

(30) Priorität: **03.11.79 CH 9861/79**

(43) Veröffentlichungstag der Anmeldung:
**13.05.81 Patentblatt 81/19**

(45) Bekanntmachung des Hinweises auf die Patenterteilung:
**28.09.83 Patentblatt 83/39**

(84) Benannte Vertragsstaaten:
**CH DE FR IT NL SE**

(56) Entgegenhaltungen:
**DE-A-2 142 413**
**GB-A-1 566 442**

(73) Patentinhaber: **PATELHOLD Patentverwertungs- & Elektro-Holding AG, Glarus (CH)**

(72) Erfinder: **Baldinger, Hans, Albisriederstrasse 158, CH-8003 Zürich (CH)**
Erfinder: **Hartmann, Peter, Dipl.-Ing., Narzissenstrasse 440, CH-5212 Hausen b. Brugg/Aargau (CH)**

BUNDESDRUCKEREI BERLIN

## Verfahren und Einrichtung zur Erzeugung von Geheimschlüsseln

Die Erfindung betrifft ein Verfahren zur Erzeugung identischer Geheimschlüssel für die Ver- und Entschlüsselung von Signalfolgen an den Endstellen einer Übertragungsstrecke aus bestehenden, identischen Geheimschlüsseln, bei dem der jeweils neue Geheimschlüssel aus einem vorangehenden Geheimschlüssel bestimmt wird sowie eine Einrichtung zur Durchführung des Verfahrens.

Bei der verschlüsselten Übertragung von Informationen in Netzen stellt die Übermittlung der Schlüssel zwischen den Teilnehmern ein wichtiges Problem dar. Grundsätzlich dürfen neue Schlüssel nicht über dasselbe verschlüsselte Netz durchgegeben werden. (Einen neuen Schlüssel verwendet man ja vor allem deshalb, weil die Gefahr, daß ein Schlüssel vom Gegner ermittelt werden kann, mit der Benützungsdauer zunimmt.) Es bleibt somit die Verteilung per Kurier oder über ein besonderes Übermittlungsnetz, das jedoch nicht immer vorhanden ist. Die Verteilung per Kurier kann bei Isolierung der Teilnehmer bzw. Netzstützpunkt schwierig sein, etwa im Kriegsfall.

Aus US-A-4 157 454 ist ein Verfahren bekannt, bei dem der Schlüssel automatisch nach jedem Arbeitszyklus nach Maßgabe der zuletzt verarbeiteten Daten- und Schlüsselbits verändert wird und daher nach einem festgelegten Bildungsgesetz erfolgt.

Es sind auch Verfahren bekanntgeworden, mittels welcher zwischen zwei Stationen über eine ungeschützte, d. h. Dritten zugängliche Leitung ein Geheimschlüssel vereinbart werden kann (siehe z. B. W. Diffie und M. Hellman, »New Directions in Cryptography«, IEEE Trans. on Information Theory, Bd. 22, Nr. 6, 1976, S. 644—654.

Diese Methoden erfordern jedoch einen hohen Rechenaufwand, um eine hinreichende kryptologische Sicherheit zu gewährleisten.

Aufgabe der Erfindung ist daher die Schaffung eines Verfahrens bzw. einer Einrichtung zur Erzeugung eines neuen Schlüssels aus dem bestehenden Schlüssel mittels der vorhandenen Schlüsselungseinrichtung, bei dem kein automatischer Ablauf des Schlüsselwechsels erfolgt, sondern bei dem mindestens ein nicht vorhersehbares, zusätzliches Element von außen d. h. durch den Benützer, zur Steuerung des Schlüsselwechsels notwendig ist. Sonst kann nämlich die Schlüsselungseinrichtung mit geändertem Schlüssel einfach als erweiterte Schlüsseleinrichtung mit festem Schlüssel aufgefaßt werden.

Die erfindungsgemäße Lösung dieser Aufgabe kennzeichnet sich durch die in den Ansprüchen 1 bzw. 8 angegebenen Merkmale.

Der Grundgedanke der Erfindung besteht darin, daß der Zeitpunkt, zu welchem der neue Schlüssel erzeugt wird, zusammen mit dem vorhandenen Schlüssel den neuen Schlüssel bestimmt. Dieser Zeitpunkt kann zwischen den Teilnehmern im voraus oder nötigenfalls auch über die verschlüsselte Übertragungsstrecke vereinbart werden. Im letzteren Fall erfährt der Gegner den neuen Schlüssel nur, wenn er den bestehenden Schlüssel bereits kennt und mit einem identischen Gerät on-line entschlüsseln kann.

Der Gegner kann den bestehenden Schlüssel entweder durch Verrat oder durch kryptologische Analyse erfahren. Im letzteren Falle kann man es auch dem on-line mithörenden Gegner unmöglich machen, den neuen Schlüssel direkt zu erfahren, indem man für die Erzeugung des neuen Schlüssels zusätzlich zum für die Übertragung verwendeten Schlüssel noch einen weiteren, nur für die Schlüsselerzeugung verwendeten Schlüssel verwendet.

Der Zeitpunkt für die Erzeugung des neuen Schlüssels braucht von den Benützern nur innerhalb gewisser Grenzen bestimmt zu werden; der exakte Zeitpunkt wird durch die ohnehin synchron arbeitenden Schlüsselungseinrichtungen bestimmt.

Eine Weiterbildung des Verfahrens besteht darin, daß der neue Schlüssel nicht nur durch den bestehenden Schlüssel und den Zeitpunkt der Erzeugung bestimmt wird, sondern zusätzlich noch durch eine auf beiden Seiten eingegebene Schlüsselzahl, wobei es sich bei dieser zusätzlich eingegebenen Zahl nicht um einen kompletten Schlüssel handeln muß, sondern eine einfach zu behaltende Zahl (z. B. drei Dezimalziffern) genügt.

Das Verfahren hat in allen Fällen den Vorteil, daß der neue Schlüssel den Benützern selbst nicht mehr bekannt ist und somit weder durch Verrat noch Erpressung an den Gegner gelangen kann.

Weitere Merkmale und Vorteile der Erfindung werden anhand der in den Zeichnungen dargestellten Ausführungsbeispiele erläutert. Hierin zeigt

Fig. 1 das Prinzipschema eines Informationsübertragungs- und Verschlüsselungssystem mit Sende- und Empfangsstation,

Fig. 2 das Funktionsschaltbild der Sende- und Empfangsstation,

Fig. 3 ein Mehrfach-Signaldiagramm zur Wirkungsweise der Schaltungen nach Fig. 2 und

Fig. 4 eine weitere Ausführung eines aus Sende- und Empfangsstation bestehenden Geheimübertragungssystems im Funktionsschaltbild und

Fig. 5 und Fig. 6 je eine weitere Beispielsausführung einer Sendestation ebenfalls im Funktonsschaltbild.

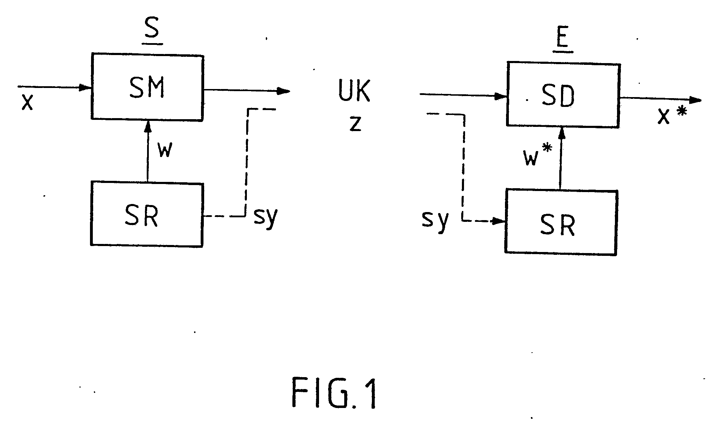

Nach der in Fig. 1 angedeuteten Prinzipanordnung ist in der Sendestation S ein Schlüsselmodulator SM mit zugehörigem Schlüsselrechner SR als Verschlüsselungseinrichtung und in der Empfangsstation E ein Schlüsseldemodulator SD mit zugehörigem Schlüsselrechner SR als Entschlüsselungseinrichtung vorgesehen. Dem Schlüsselmodulator SM wird die einem Klarsignal entsprechende Impulsfolge x sowie vom Schlüsselrechner eine Impulsfolge w als Schlüsselsignal zugeführt. Durch die laufende Mischung der Schlüsselsignal- und Klarsignalbits ergibt sich die Impulsfolge z des verschlüsselten Signals, welches über einen Übertragungskanal UK zur Empfangsstation E gelangt. Hier wird der Schlüsseldemodulator SD wiederum mit den Impulsfolgen z und w* beaufschlagt, woraus die Klarsignal-Impulsfolge x* (der Einfachheit halber in gleicher Weise bezeichnet wie auf der Sendeseite) wiedergewonnen wird.

Für eine korrekte Entschlüsselung auf der Empfangsseite muß der dortige Schlüsselrechner mit dem sendeseitigen Schlüsselrechner genau synchronisiert werden. Bei einem transparenten Verschlüsselungssystem erfolgt die Synchronisierung beispielsweise durch eine Synchronisiersequenz, die zu Beginn der Übertragung vom Sender zum Empfänger übermittelt wird.

In den sende- und empfangsseitigen Schlüsselrechnern steht eine Vielzahl von synchronen Pseudozufallsfolgen zur Verfügung, welche durch Anzapfung jeweils gleicher Punkte der Schaltung gewonnen werden können. Wird ein Abschnitt einer derartigen Folge bei beiden Stationen gleichzeitig in einen Speicher eingelesen, enthalten die beiden Speicher die gleichen Ziffern, welche somit als neue Schlüssel für die Rechner verwendet werden können.

Damit die Speicherinhalte beider Stationen übereinstimmen, muß der Anfangszeitpunkt des Einlesens in den Speicher bei Sender und Empfänger exakt übereinstimmen. Die Übereinstimmung kann erreicht werden, indem über einen speziellen Kanal ein Auslöseimpuls übertragen wird. Die Übertragung des Auslöseimpulses muß verschlüsselt erfolgen, da der Zeitpunkt des Einlesens in den Speicher die neue Schlüsselinformation darstellt. Handelt es sich bei der übertragenen Nutzinformation um ein Mehrkanalsignal im Zeitmultiplex, so kann der Auslöseimpuls über einen der Kanäle, beispielsweise den Dienstkanal, übertragen werden.

Eine weitere Möglichkeit zur Bestimmung des Einlese-Zeitpunktes in den Speicher besteht darin, daß dieser Zeitpunkt zwischen den beiden Stationen vereinbart wird. Dieser Zeitpunkt kann bitsynchron bestimmt werden durch Steuerimpulse, welche in den Rechnern selbst bitsynchron erzeugt werden. Sofern die Steuerimpulse relativ selten (z. B. im Mittel alle fünf Sekunden) auftreten, genügt es, daß in Sender und Empfänger das gleiche, dem jeweiligen Steuerimpuls vorangehende Intervall ausgewählt wird. Das Einlesen in den Speicher beginnt dann bitsynchron auf den Steuerimpuls am Ende des Intervalls. Die Wahl des Intervalls stellt relativ geringe Anforderungen an die Synchronisiergenauigkeit. Werden in Sender und Empfänger die Intervalle zu bestimmten Zeitpunkten ausgewählt, die um wenige Millisekunden auseinander liegen, so erfolgt der Beginn des Einlesens mit großer Wahrscheinlichkeit auf den gleichen Steuerimpuls, d. h. bitsynchron.

Die Intervalle werden wie folgt bestimmt: Sofern der Beginn jedes Intervalls dem Operateur angezeigt wird, kann er beispielsweise durch Tastendruck ein bestimmtes Intervall auswählen. Um eine synchrone Änderung des Schlüsselsignals herbeizuführen, verständigen sich die Operateure über eine separate Leitung oder einen Dienstkanal und verabreden den Tastendruck anschließend an den Beginn eines bestimmten Intervalls.

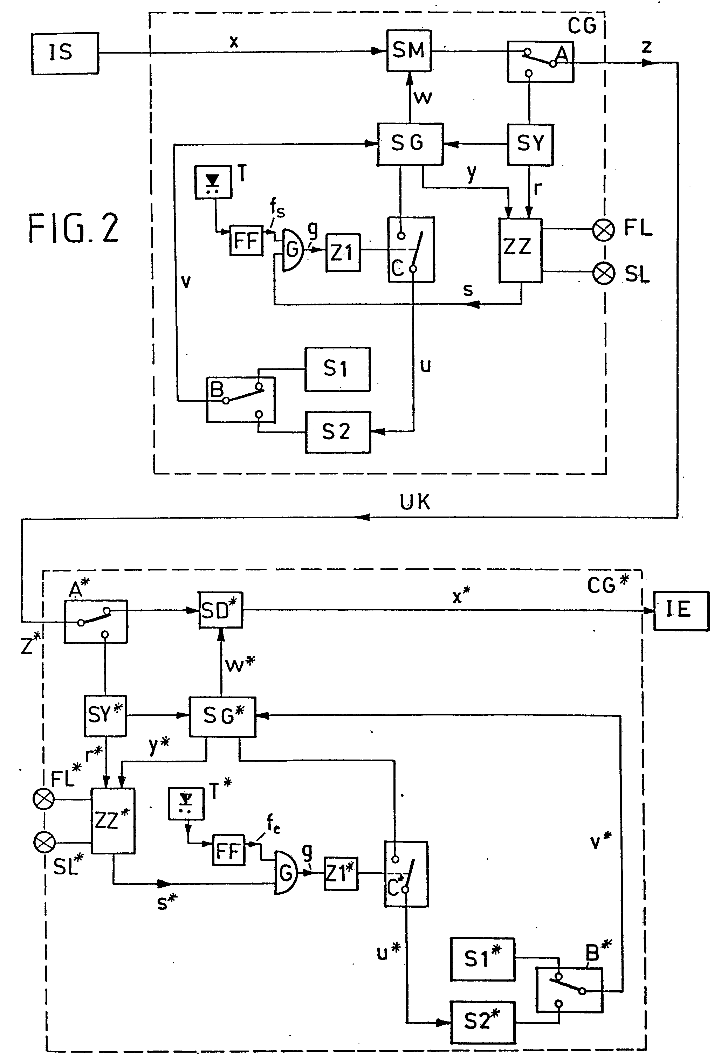

Das Blockschema ist in Fig. 2 gezeigt. Die zu verschlüsselnden Daten x vom Informationssender IS gelangen über eine Leitung zum sendeseitigen Chiffriergerät CG, wo sie in einem Schlüsselmodulator SM mit dem im Schlüsselgenerator SG erzeugten Schlüsselsignal w gemischt werden. Das verschlüsselte Ausgangssignal z gelangt über den Übertragungskanal UK zum empfangsseitigen Chiffriergerät CG*, wo es im Schlüsseldemodulator SD* entschlüsselt wird. Die Chiffriergeräte CG, CG* enthalten ferner mindestens zwei Speicher für die Schlüssel, nämlich einen ersten Speicher S1 bzw. S1* und einen zweiten Speicher S2 bzw. S2*, sowie einen Umschalter B bzw. B*, mittels dessen einer der Speicher ausgewählt werden kann. Ferner enthalten die Chiffriergeräte eine Synchronisierschaltung SY bzw. SY*.

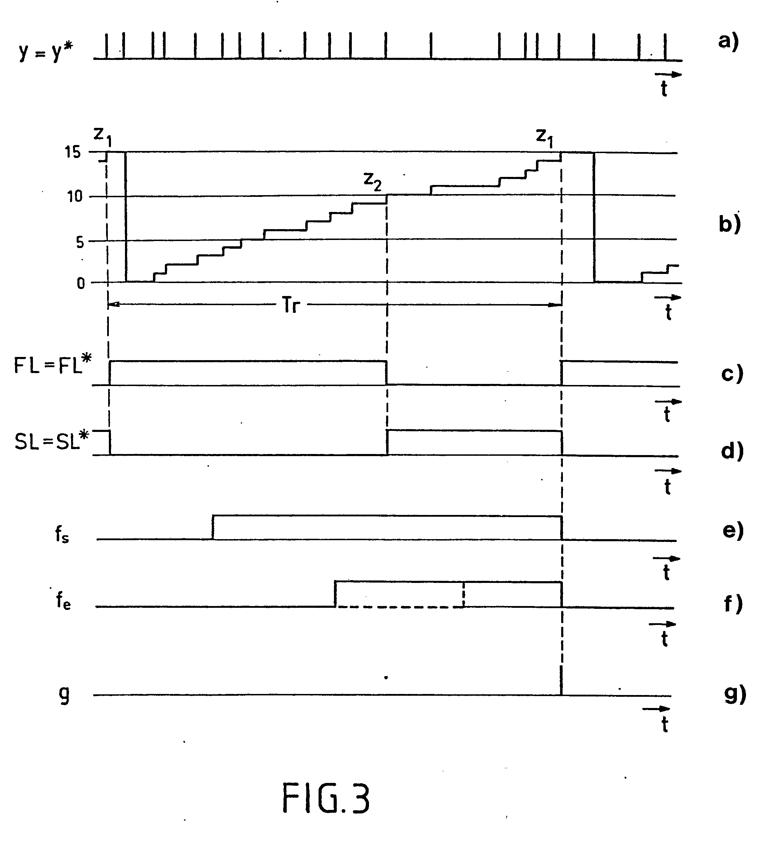

Im Zufallsimpulszähler ZZ werden die vom Schlüsselgenerator SG erzeugten seltenen Zufallsimple y gezählt, vgl. Fig. 3 Der Zähler ZZ ist ein umlaufender Zähler, welcher nach Erreichen des höchsten Zählerstandes wieder von Null an zu zählen beginnt. Zwei Zustände $Z_1$ und $Z_2$ des Zählers (in Fig. 3 Zustände 15 und 10) werden decodiert. Bei jedem Durchlauf von $Z_1$ gibt der Zähler einen Steuerimpuls s ab, welcher den Schalter C für eine bestimmte Anzahl Taktschritte einschaltet, sofern das Gatter G durchlässig ist. Dies ist dann der Fall, wenn der Ausgang des Flipflops FF durch vorhergehenden Druck der Taste T auf Eins gesetzt wurde. Die Anzahl Taktschritte ist mindestens gleich der Anzahl Bits des Speichers S2 und wird durch den Zähler Z1 bestimmt. Durch diesen Vorgang wird neue Information u vom Schlüsselgenerator SG in den Schlüsselspeicher S2 eingelesen.

Der Gleichlauf der sende- und empfangsseitigen Steuerimpulse s und s* wird dadurch gewährleistet, daß bei jeder Synchronisierung der Schlüsselgeneratoren die Zähler ZZ und ZZ* durch die Rücksetzsignale r bzw. r* auf Null gesetzt werden.

Ein einzelnes Intervall ist durch einen Umlauf des Zählers $Z_1$ nach $Z_1$ bestimmt. Die Decodierung von $Z_2$ ergibt die Aufteilung des Intervalls in zwei Unterabschnitte. Während des ersten Intervalls wird ein Signal FL abgegeben, während des zweiten Intervalls ein Signal SL. Die Signale FL und SL werden auf der Frontplatte des Chiffriergerätes durch eine grüne bzw. rote Lampe angezeigt. Grundsätzlich kann der Operateur die Taste T während des ganzen Intervalls betätigen. Schreibt man vor, daß die Taste nur während des ersten Abschnittes, d. h. während des Aufleuchtens der grünen Lampe, betätigt werden darf, so bildet der zweite Abschnitt ein Sicherheits-Intervall, wodurch ein zu spätes Drücken der Taste verhindert wird.

Der im Speicher S2 enthaltene Schlüssel wird erst aktiv durch Betätigen des Schalters B. Vorteilhafterweise geschieht die Betätigung der sende- und empfangsseitigen Schalter B und B* ebenfalls bitsynchron, wodurch der Schlüsselwechsel synchron, d. h. ohne Störung der Netzinformation, erfolgt. Der synchrone Wechsel kann entweder durch Druck einer zweiten Taste — unter Verwendung des gleichen Prinzips mit dem Zufallszähler — ausgelöst werden, oder erfolgt automatisch anschließend an das Einlesen des neuen Schlüssels in den Speicher S2.

Nunmehr wird die Wirkungsweise der Schaltung nach Fig. 2 anhand der Zeitdiagramme in Fig. 3 näher erläutert.

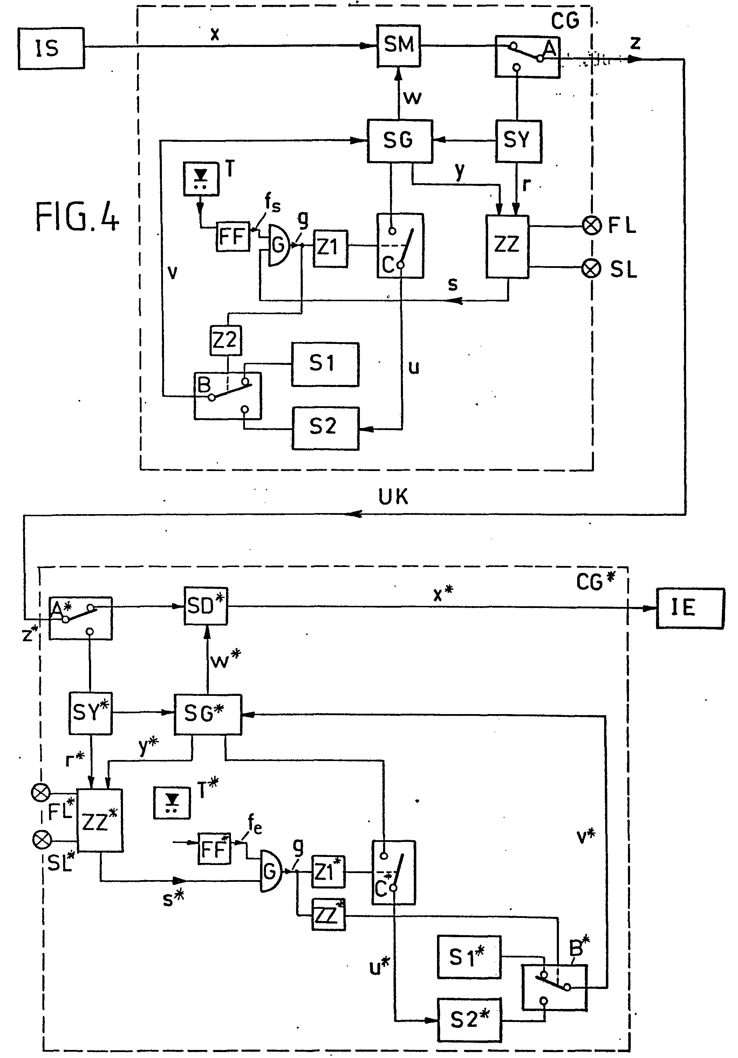

In Zeile a) von Fig. 3 ist eine Pseudo-Zufallsimpulsfolge y angedeutet, wie sie beispielsweise mit der noch zu erläuternden Schaltung nach Fig. 4 in der Sende- und Empfangsstation synchron gebildet wird. Zeile b) zeigt ein durch Aufwärtszählen zwischen 0 und $Z_1$ im Zähler ZZ gemäß Fig. 2 bestimmtes Zeitintervall Tr angedeutet. Die einzelnen Zählschritte und damit auch der Neubeginn einer Zählung nach Erreichen von $Z_1$ beim Zählerstand 0 erfolgt synchron mit den Impulsen der Folge y. In Zeile c) ist das Signal des Signalgebers FL zur Markierung des für die Umschaltauslösung vorgesehenen Teilabschnitts von Tr und in Zeile d) das Signal des Signalgebers SL zur Markierung des restlichen Teilabschnitts als Sicherheitsintervall angedeutet. In Zeile e) ist das sendeseitige Umschalt-Freigabesignal $f_s$ und in Zeile f) das empfängerseitige Freigabesignal $f_e$ angedeutet. Ersichtlich können diese beiden Signale innerhalb des vergleichsweise großen Zeitintervalls Tr entsprechend einer manuellen Auslösung zu verschiedenen Zeitpunkten, d. h. asynchron, gegeben werden. Unabhängig davon erfolgt jeweils am Ende des ausgewählten Rahmen-Zeitintervalls die tatsächliche Umschaltung der Schlüsselsignalfolge durch Betätigung des Schalters B (siehe Fig. 2) mit dem in Zeile g) angedeuteten Steuerimpuls g, also gleichzeitig in beiden Stationen.

Gegebenenfalls kann diese Umschaltung auch durch ein externes Steuersignal ausgelöst werden, wobei ebenfalls die asynchrone Vorwahl in beiden Stationen eine Erweiterung darstellt.

Das Blockschema einer derartigen Einrichtung ist in Fig. 4 gezeigt. Zusätzlich zu den Einrichtungen der Fig. 2 enthält Fig. 4 einen zweiten Zähler Z2, welcher zu einem bestimmten Zeitpunkt nach Auftreten des Zufallsimpulses s den elektronischen Schalter B umschaltet, wodurch der neue, in S2 gespeicherte Schlüssel aktiv wird.

Es kann vorkommen, daß aus irgendeinem Grund in Sender und Empfänger verschiedene Intervalle ausgewählt werden. In diesem Fall werden sende- und empfangsseitig verschiedene Schlüssel in die Speicher S2 bzw. S2* eingelesen, so daß bei Betätigung des Schalters B der Synchronismus der beiden Schlüsselgeneratoren SG und SG* verlorengeht. Man wird daher mit Vorteil die Chiffriergeräte so auslegen, daß in einem solchen Fall eine automatische Neusynchronisierung der Geräte mit dem alten, in S1 gespeicherten Schlüssel erfolgt, wobei ein Alarm ausgelöst wird.

Insbesondere bei der Übertragung großer Informationsmengen über den Kanal ist es denkbar, daß der Gegner den verwendeten Schlüssel durch Kryptoanalyse ermitteln kann. Dadurch ist er in der Lage, die Verbindung abzuhören und auch selbst einen identischen neuen Schlüssel zu erzeugen. Die Erzeugung eines neuen Schlüssels durch den Gegner kann verhindert werden, indem nur ein Teil des in S1 gespeicherten Schlüssels bei der Verschlüsselung der Information (d. h. bei der Erzeugung des Schlüsselsignals w) wirksam wird, während der restliche Teil des Schlüssels ausschließlich zur Erzeugung des neuen Schlüssels u verwendet wird. Der Gegner hat keine Möglichkeit, diesen restlichen Teil des Schlüssels durch krypto-analytische Methoden zu bestimmen und ist damit nicht in der Lage, selbst einen neuen identischen Schlüssel zu erzeugen, auch wenn er den ersten Teil des alten Schlüssels ermittelt hat.

Eine Weiterbildung dieser Lösung besteht darin, daß zur Erzeugung des neuen Schlüssels durch die Operateure zusätzliche Schlüsselzahlen in einen Zusatzspeicher ZA eingegeben werden, welche bei der Erzeugung des neuem Schlüssels u wirksam werden. (Diese zusätzlichen Schlüsselzahlen dürfen nicht über die Leitung vereinbart werden!) Der neue Schlüssel ist somit nicht nur durch den alten Schlüssel und den Zeitpunkt der Erzeugung, sondern auch durch den zusätzlichen Schlüssel bestimmt.

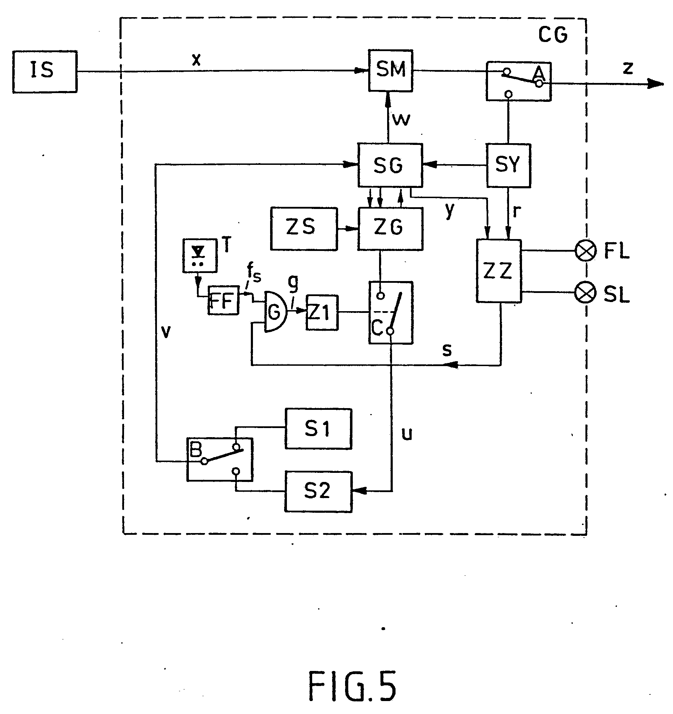

Das zugehörige Blockschema ist in Fig. 5 gezeigt. Die Wirkung des zusätzlichen Schlüssels auf die Erzeugung von u ist durch den Zusatzgenerator ZG angedeutet. Der Zusatzgenerator ZG bildet aus mehreren dem Schlüsselgenerator SG entnommenen Pseudo-Zufallssignalen den neuen Geheimschlüssel u, wobei das Bildungsgesetz durch den im Zusatzspeicher ZS gespeicherten Zusatzschlüssel bestimmt wird.

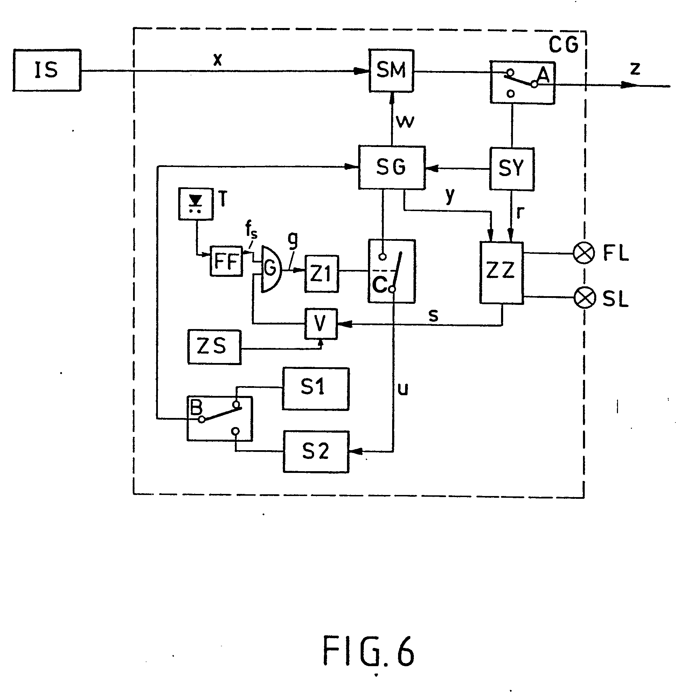

Eine zweite Möglichkeit besteht darin, daß der Zusatzschlüssel den Zeitpunkt der Betätigung des Schalters C beeinflußt. Dies kann beispielsweise dadurch erreicht werden, daß der Zusatzschlüssel eine bestimmte Verzögerung des Steuerimpulses s bewirkt. Dies ist in Fig. 6 durch das Verzögerungsglied V angedeutet.

Nach erfolgreich durchgeführter Erzeugung und Aktivierung eines neuen Schlüssels können mittels des beschriebenen Verfahrens weitere neue Schlüssel erzeugt werden, wobei der ursprüngliche, im Speicher S1 enthaltene Schlüssel gelöscht bzw. überschrieben wird und damit verlorengeht. Die beiden Chiffriergeräte enthalten somit nach dem zweiten Schlüsselwechsel in den Speichern S1/S1* und S2/S2* gleichen, jedoch unbekannten Schlüssel. Muß nun eines der Chiffriergeräte, z. B. infolge eines Defektes, ausgewechselt werden, muß in beiden Geräten ein neuer Schlüssel extern eingegeben werden. Die Notwendigkeit einer Neueingabe der Schlüssel kann vermieden werden, indem ein zusätzlicher Reservespeicher vorgesehen wird, in welchem ein zusätzlicher Schlüssel gespeichert wird, welcher auch bei mehrfachem Schlüsselwechsel nicht verändert wird. Somit kann man nach Auswechseln eines Gerätes manuell auf den Reserveschlüssel umschalten, wobei anschließend auch aus dem Reserveschlüssel neue Schlüssel erzeugt werden können, welche in S2 oder S1 gespeichert werden können.

**Patentansprüche**

1. Verfahren zur Erzeugung identischer Geheimschlüssel für die Ver- und Entschlüsselung von Signalfolgen an den Endstellen einer Übertragungsstrecke aus bestehenden, identischen Geheimschlüsseln, bei dem der jeweils neue Geheimschlüssel aus einem vorangehenden Geheimschlüssel bestimmt wird, dadurch gekennzeichnet, daß die Erzeugung des neuen Geheimschlüssels durch einen von außen kommenden Befehl eingeleitet und der neue Geheimschlüssel durch den Zeitpunkt des Befehls bestimmt werden.

2. Verfahren nach Anspruch 1, dadurch gekennzeichnet, daß der jeweils neue Geheimschlüssel durch synchrone Entnahme von Signalen aus an beiden Endstellen synchronen pseudozufälligen Signalfolgen und Einlesen dieser Signale in einen Schlüsselspeicher (S2) gewonnen wird.

3. Verfahren nach Anspruch 2, dadurch gekennzeichnet, daß der Beginn der Entnahme der neuen Schlüssel durch ein über den Kanal übertragenes Signal ausgelöst wird.

4. Verfahren nach Anspruch 2, dadurch gekennzeichnet, daß in zeitlicher Zuordnung zu sende- und empfangsseitigen Schlüsselsignalfolgen synchrone, pseudozufällige Steuerimpulse mit bezüglich deren Folgefrequenz geringerer Folgefrequenz abgeleitet werden, daß der Beginn der Entnahme des neuen Schlüssels nur zu den Zeitpunkten der Steuerimpulse erfolgen kann und daß der tatsächliche Zeitpunkt durch die Wahl eines dem entsprechenden Steuerimpuls vorangehenden Signalfolge-Intervalls festgelegt wird.

5. Verfahren nach Anspruch 2, dadurch gekennzeichnet, daß mindestens ein Teil des für die Erzeugung des neuen Geheimschlüssels verwendeten bestehenden Schlüssels ausschließlich für die Erzeugung des neuen Geheimschlüssels verwendet wird.

6. Verfahren nach Anspruch 1, dadurch gekennzeichnet, daß der neue Geheimschlüssel außerdem durch einen Zusatzschlüssel bestimmt wird, der an beiden Enden der Verbindung vor dem Befehl zur Erzeugung des neuen Geheimschlüssels eingegeben wird.

7. Verfahren nach Anspruch 1, dadurch gekennzeichnet, daß der neu erzeugte Geheimschlüssel an beiden Enden der Verbindung automatisch und synchron den bestehenden Schlüssel ersetzt.

8. Einrichtung zur Durchführung des Verfahrens nach Anspruch 1 und 2, gekennzeichnet durch folgende Merkmale:

a) einem Schlüsselsignalgenerator (SG) wird ein pseudozufälliges Signal (U) entnommen;

b) dieses Signal wird über einen von einem Gatter (G) gesteuerten Schalter (C) einem Schlüsselspeicher (S2) zugeführt und

c) das Gatter wird von einem extern bestimmten Zeitpunkt an für eine Anzahl Bits freigegeben, die mindestens der Kapazität des Schlüsselspeichers entspricht.

9. Einrichtung nach Anspruch 8, dadurch gekennzeichnet, daß dem Schlüsselsignalgenerator mehrere Pseudozufallssignale entnommen werden, daß diese Signale in einer logischen Schaltung Zusatzgenerator (ZG) miteinander verknüpft werden, wobei die Verknüpfung durch den im Zusatzspeicher (ZS) enthaltenen Zusatzschlüssel bestimmt wird.

10. Einrichtung nach Anspruch 9, dadurch gekennzeichnet, daß die logische Schaltung (ZG) Speicher enthält.

11. Einrichtung nach Anspruch 8, dadurch gekennzeichnet, daß der Zusatzschlüssel den Zeitpunkt der Freigabe des Gatters (G) beeinflußt.

12. Einrichtung nach einem der Ansprüche 7 bis 10, dadurch gekennzeichnet, daß die Aktivierung des neu erzeugten Schlüssels manuell vorbereitet wird.

13. Einrichtung nach einem der Ansprüche 7 bis 11, dadurch gekennzeichnet, daß die Aktivierung des neu erzeugten Schlüssels im Anschluß an die Erzeugung automatisch und bitsynchron erfolgt.

14. Einrichtung nach Anspruch 13, dadurch gekennzeichnet, daß bei erfolgloser Neu-Synchronisierung mit dem neu erzeugten Schlüssel automatisch eine Neu-Synchronisierung der Schlüsselsignalgeneratoren mit dem alten Schlüssel erfolgt, wobei ein Alarm ausgelöst wird.

15. Einrichtung nach einem der Ansprüche 7 bis 13, dadurch gekennzeichnet, daß ein zusätzlicher Speicher für einen Reserveschlüssel vorhanden ist, dessen Inhalt durch die automatische Erzeugung neuer Schlüssel nicht beeinflußt wird.

## Claims

1. A method for generating identical secret codes for the coding and decoding of sequences of signals at the terminals of a transmission path from existing identical secret codes, in which method the respective new secret code is determined from a preceding secret code, characterised in that the generation of the new secret code is initiated by a command coming from outside and the new secret code is determined by the timing of the command.

2. A method according to Claim 1, characterised in that the respective new secret code is obtained by the synchronous removal of signals from pseudo-random signal sequences which are synchronous at both terminals and by reading these signals into a code memory (S2).

3. A method according to Claim 2, characterised in that the beginning of the removal of the new code is triggered by a signal treanmitted via the channel.

4. A method according to Claim 2, characterised in that, in a time-related association with code signal sequences at the transmitter and at the receicer, synchronous and pseudo-random control pulses are derived, the repetition frequency of which is lower with respekt to the repetition frequency of the code signal sequences, that the beginning of the removal of the new code can occur only at the times at which the control pulses occur and that the actual time is fixed by selecting a signal sequence interval which precedes the respective control pulse.

5. A method according to Claim 2, characterised in that at least a part of the existing code used for generating the new secret code is used exclusively for generating the new secret code.

6. A method according to Claim 1, characterised in that the new secret code is also determined by an additional code which is entered at both terminals of the connection before the command for generating the new secret code.

7. A method according to Claim 1, characterised in that the newly generated secret code automatically and synchronously replaces the existing code at both terminals of the connection.

8. A device for carrying out the method according to Claim 1 and 2, characterised by the following features:

a)   a code signal generator (SG) supplies a pseudorandom signal (U);
b)   this signal is fed via a switch (C) controlled by a gate (G) to a code memory (S2) and
c)   the gate is opened, starting at a time which is externally determined, for a number of bits which corresponds at least to the capacity of the code memory.

9. A device according to Claim 8, characterised in that the code signal generator supplies several pseudorandom signals, that these signals are linked with each other in a logic circuit additional generator (ZG), the type of linking being determined by the additional code contained in the additional memory (ZS).

10. A device according to Claim 9, characterised in that the logic circuit (ZG) contains memories.

11. A device according to Claim 8, characterised in that the additional code affects the time of enabling of the gate (G).

12. A device according to one of Claims 7 to 10, characterised in that the activation of the newly generated code is prepared manually.

13. A device according to one of Claims 7 to 11, characterised in that the newly generated code is automatically and bit-synchronously activated after generation.

14. A device according to Claim 13, characterised in that in the case of unsuccessful resynchronisation with the newly generated code the code signal generators are automatically resynchronised with the old code which causes an alarm to bei triggered.

15. A device according to one of Claims 7 to 13, characterised in that an additional memeory exists for a reserve code the contents of which are not affected by the automatic generation of new codes.

## Revendications

1. Procédé de génération de clefs secrètes identiques pour le codage et le décodage de séquences de signaux aux postes terminaux d'une voie de transmission, à partir de clefs secrètes identiques existantes, pour lequel la clef secrète nouvelle est déterminée à partir d'une clef secrète précédente, caractérisé en ce que la génération de la nouvelle clef secrète est amorcée par un ordre venant de l'extérieur et la nouvelle clef secrète est déterminée par le moment de cet ordre.

2. Procédé suivant la revendication 1, caractérisé en ce que la nouvelle clef secrète est chaque fois obtenue par le prélèvement synchrone de signaux de séquences de signaux pseudo-aléatoires synchrones aux deux postes terminaux et par l'introduction de ces signaux dans une mémoire de clef (S2).

3. Procédé suivant la revendication 2, caractérisé en ce que le début du prélèvement de la nouvelle clef est enclenché par un signal transmis par l'intermédiaire du canal.

4. Procédé suivant la revendication 2, caractérisé en ce que des impulsions de commande pseudo-aléatoires synchrones sont dérivées à une fréquence de répétition inférieure à leur fréquence de répétition propre d'une façon coordonnée dans le temps du côté de l'émetteur et du côté du récepteur, le début du prélèvement de la nouvelle clef ne pouvant correspondre qu'aux moments des impulsions de commande et le moment effectif étant déterminé par le choix d'un intervalle de la séquence de signaux précédant l'impulsion de commande correspondante.

5. Procédé suivant la revendication 2, caractérisé en ce qu'au moins une partie de la clef existante utilisée pour générer la nouvelle clef secrète est utilisée exclusivement pour produire la nouvelle clef secrète.

6. Procédé suivant la revendications 1, caractérisé en ce que la nouvelle clef secréte est, en outre, déterminée par une clef supplémentaire qui est introduite aux deux extrémités de la liaison avant l'émission de l'ordre de production de la nouvelle clef secrète.

7. Procédé suivant la revendication 1, caractérisé en ce que la nouvelle clef secrète produite remplace automatiquement et de façon syncrone la clef existante aux deux extrémités de la liaison.

8. Dispositif pour l'exécution du procédé suivant les revendications 1 et 2, caractérisé par les particularités suivantes:

a) un signal pseudo-aléatoire (u) est obtenu d'un générateur de signal de clef (SG);

b) ce signal est amené par l'intermédiaire d'un commitateur (C) commandé par une porte (G) à une mémoire de clef (S2), et

c) la porte est libérée à partir d'un moment déterminé de l'extérieur pour un certain nombre de bits qui correspond au moins à la capacité de la mémoire de clef.

9. Dispositif suivant la revendication 8, caractérisé en ce que plusieurs signaux pseudo-aléatoires sont prélevés du générateur de signal de clef, ces signaux sont combinés dans un générateur auxiliaire (ZG) à circuit logique et la combinaison est déterminée par la clef supplémentaire contenue dans la mémoire supplémentaire (ZS).

10. Dispositif suivant la revendication 9, caractérisé en ce que le circuit logique (ZG) contient une mémoire.

11. Dispositif suivant la revendication 8, caractérisé en ce que la clef supplémentaire influence le moment de la libération de la porte (G).

12. Dispositif suivant l'une quelconque des revendications 7 à 10, caractérisé en ce que l'activation de la clef nouvellement produite est préparée à la main.

13. Dispositif suivant l'une quelconque des revendications 7 à 11, caractérisé en ce que l'activation de la clef nouvellemnt produite s'effectue automatiquement et d'une manière synchrone quant aux bits à la suite de sa génération.

14. Dispositif suivant la revendication 13, caractérisé en ce que lors d'un raté de la nouvelle synchronisation avec la clef nouvellement produite, une nouvelle synchronisation des générateurs de signaux de clefs avec l'ancienne clef se produit et s'accompagne du déclenchement d'une alarme.

15. Dispositif suivant l'une quelconque des revendications 7 à 13, caractérisé en ce qu'une mémoire auxiliaire pour une clef de réserve est présente le contenu de cette mémoire n'étant pas influencé par la production automatique de nouvelles clefs.

FIG.1

FIG. 2

FIG.3

0 028 273

FIG.4

FIG.5

FIG. 6